Europäisches Patentamt

European Patent Office

Office européen des brevets

(19)

(11) **EP 1 157 898 B1**

(12) **EUROPÄISCHE PATENTSCHRIFT**

(45) Veröffentlichungstag und Bekanntmachung des Hinweises auf die Patenterteilung:
**15.10.2003  Patentblatt 2003/42**

(51) Int Cl.$^7$: **B60R 21/01**

(21) Anmeldenummer: **01111397.4**

(22) Anmeldetag: **10.05.2001**

(54) **Verfahren zur Detektion von Überrollvorgängen bei Kraftfahrzeugen mit Sicherheitseinrichtungen**

Method for rollover detection of vehicles with safety system

Procédé de détection d'entournement des voitures avec système de sécurité

(84) Benannte Vertragsstaaten:
**DE ES FR GB IT SE**

(30) Priorität: **22.05.2000  DE 10025260**

(43) Veröffentlichungstag der Anmeldung:
**28.11.2001  Patentblatt 2001/48**

(73) Patentinhaber: **Conti Temic microelectronic GmbH**
**90411 Nürnberg (DE)**

(72) Erfinder:
• **Küblbeck, Hermann**
**86529 Schrobenhausen (DE)**
• **Rottenkolber, Ernst**
**85238 Petershausen (DE)**
• **Steiner, Dr. Peter**
**86529 Schrobenhausen (DE)**
• **Steurer, Helmut**
**85302 Gerolsbach-Junkenhofen (DE)**
• **Weidel, Peter**
**85276 Pfaffenhofen (DE)**

(56) Entgegenhaltungen:
**EP-A- 0 430 813     EP-A- 0 965 502**
**WO-A-99/17963      DE-A- 19 744 083**
**DE-A- 19 828 338    US-A- 6 038 495**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Detektion von Überrollvorgängen bei Kraftfahrzeugen mit Sicherheitseinrichtungen, bei dem mittels eines Gyrosensors die Winkelgeschwindigkeit von Wank- oder Drehbewegungen um die Längsachse (Wankachse) des Fahrzeuges gemessen wird.

AUS der DE 196 09 717 A1 ist ein Verfahren zur Erkennung von Überrolivorgängen bekannt, bei dem jeweils ein Drehratensensor die Winkelgeschwindigkeit um die Hochachse (Gierachse), die Längsachse und die Querachse (Nickachse) des Fahrzeuges mißt und ein Überrollvorgang detektiert wird, wenn mindestens eine der gemessenen Winkelgeschwindigkeiten einen vorgegebenen Schwellwert (Grenzwert) überschreitet. Ferner wird In dieser Druckschrift vorgeschlagen, aus den Winkelgeschwindigkeiten die Rotationsenergie des Fahrzeugs zu berechnen und einen drohenden Überrollvorgang anzuzeigen, wenn die Rotationsenergie eine bestimmte Schwelle überschreitet. Nachteilig bei diesem Verfahren ist jedoch, daß Fehlentscheidungen nicht ausgeschlossen werden können, wenn bspw. das Fahrzeug in steilem Gelände fährt, langsame wankbewegungen bei Kurvenfahrten oder schnelle Wankbewegungen, insbesondere beim Einfahren in Steilkurven erfährt.

Um solche Fehlentscheidungen bei der Überrollsensierung zu vermeiden, wird in der DE 19744 084 vorgeschlagen, die Initiallage, das heißt die Ausgangslage des Fahrzeuges zu bestimmen, indem die Beschleunigungen des Fahrzeuges in Richtung seiner Hochachse (Gierachse), Längsachse und Querachse (Nickachse) gemessen werden, um hieraus den Initial-Lagewinkel, also den Ausgangslagewinkel berechnen zu können. Dieser Initial-Lagewinkel wird bei einer Integration von gemessenen Drehraten, beispielsweise um die Längsachse zur Ermittlung des aktuellen Lagewinkels des Fahrzeuges als integrationskonstante verwendet. Die Realisierung dieses bekannten Verfahrens ist teuer, da es eine große Anzahl von Sensoren - drei Beschleunigungssensoren und wenigstens ein Drehratensensor erfordert. Außerdem ist dieses Verfahren hinsichtlich seiner Zuverlässigkeit verbesserungsbedürftig, da der Schwellwert nicht so ausgelegt werden kann, daß alle auftretenden Überschlagszenarien (also schnelle und langsame Überschläge, Durchfahren einer Steilkurve oder Befahren einer Schraubrampe mit anschließendem Überschlag), sicher und zuverlässig erfaßt werden.

Ein verfahren zur Detektion eines Überrollvorganges, bei dem lediglich ein Neigungssensor und ein Drehratensensor eingesetzt wird, ist aus der WO 9950103 bekannt. Bei diesem bekannten Verfahren wird eine Sicherheitseirichtung dann ausgelöst, wenn sowohl das Signal des Drehratensensors als auch das Signal des Neigungssensors jeweils einen bestimmten Schwellwert übersteigt. Dadurch, daß lediglich die Winkelgeschwindigkeit unter Berücksichtigung der Winkellage des Fahrzeuges zur Detektion eines Überschlages verwendet wird, können mit dieser Anordnung lediglich schnelle Überrollvorgänge, jedoch nicht langsame, sogenannte quasistatische Überschläge rechtzeitig erkannt werden.

Schließlich ist auch aus der EP 0 430 813 B1 ein Sicherheitssystem für Kraftfahrzeuge mit einer elektronischen Anordnung zur Steuerung wenigstens einer Sicherheitseinrichtung im Falle eines Überschlags eines Kraftfahrzeugs bekannt. Dieses Sicherheitssystem enthält ein Gyrometer (Drehraten- oder Gyrosensor), das die Drehgeschwindigkeit der Wankbewegung mißt, und Beschleunigungsmesser zur Messung der Beschleunigungswerte in Richtung der Hoch-, Längs- und Querachse, um hieraus u. a. einen zum Neigungswinkel in Querrichtung proportionalen Wert zu berechnen. Bei Überschreiten eines schwellwertes durch diesen letztgenannten Wert werden von der elektronischen Anordnung die vom Gyrometer und von den Beschleunigungssensoren stammenden Signale zur Steuerung der Auslösung der Sicherheitseinrichtung durch Integration des Drehratensignales während eines vorgegebenen Zeitfensters ausgewertet. Damit wird lediglich ein Überlaufen der Integration verhindert.

Der Nachteil des in diesem Sicherheitssystem verwendeten Auslösealgorithmus besteht vor allem darin, daß zur Verhinderung des Überlaufes der Integration neben des Signalen des Drehratensensors weitere Signale, nämlich Signale von Beschleunigungssensoren erforderlich sind, die lediglich dem Zweck dienen, die Drehratensensorsignale auswerten zu können, jedoch hohe Herstellkosten des Gesamtsystems zur Folge haben. Als weitere Nachteil ist erkannt worden, daß die Auswertung des Drehratensignals nicht die Kraftfahrzeuglage, also den Ausgangslagewinkel, bezogen auf die Horizontalebene berücksichtigt.

Es ist deshalb Aufgabe der Erfindung, ein Verfahren zur Detektion von Überrollvorgängen bei Kraftfahrzeugen anzugeben, das die oben genannten Nachteile vermeidet, also kostengünstig realisierbar ist und dennoch eine hohe Zuverlässigkeit sowohl hinsichtlich dem rechtzeitigen Erkennen eines Überschlages als auch dem Ausschluß von Fehlauslösungen aufweist

Diese Aufgabe wird mit den Verfahrensschritten gemäß den Merkmalen des Patentanspruches 1 gelöst. Hiernach wird ausgehend von dem die Initiallage des Fahrzeuges angebenden Lagewinkel das integrierte Drehratensignal - als Drehwinkel - hinzuaddiert, so daß der zum augenblicklichen Neigungswinkel (bezogen auf die Horizontalebene) proportionale Betrag dieses wertes mit einer drehratenabhängigen Auslöseschwelle verglichen werden kann. Wird diese Auslöseschwelle von dem Summenwert überschritten, erfolgt eine Auslösung einer Sicherheitseinrichtung, bspw. eines Überrollbügels, Gurtstraffer und möglicherweise mehrerer Airbags.

Bei einer vorteilhaften Ausführungsform des erfindungsgemäßen Verfahrens werden weitere dynamischen Bewegungsgrößen des Fahrzeuges, vorzugsweise können dies Beschleunigungen in Richtung der Hochachse, der Querachse und die Neigung, bezogen auf die Horizontallage in Querrichtung sein, erfaßt und deren Plausibilität, also die Widerspruchsfreiheit der Werte bewertet. Sind diese werte in sich widerspruchsfrei, wird aus den Beschleunigungswerten der aktuelle Neigungswinkel oder, falls der das Initiallagesignal erzeugende Sensor als Neigungssensor verwendet wird, dessen Wert als aktueller Neigungswinkel als Ausgangsgröße der Integration des Drehratensignals zugrundegelegt und gleichzeitig das Integral auf Null zurückgesetzt. Werden diese Werte dagegen nicht als widerspruchsfrei bewertet, wird der berechnete Neigungswinkel auf einen Schätzwert zurückgeführt und dieser Schätzwert als Ausgangsgröße der Integration des Drehratensignals verwendet, wobei auch hier vor Übernahme dieses Schätzwertes das integral auf Null gesetzt wird.

Damit werden die bei einer über einen längeren Zeitraum durchgeführten Integration über die Drehrate auftretenden Fehler bzw. Abweichungen vom tatsächlichen Drehwinkel berücksichtigt und vermieden, so daß damit die Zuverlässigkeit des Verfahrens weiter erhöht wird.

Vorzugsweise wird als Schätzwert der wert Null als aktueller Neigungswinkel angenommen, oder der Wert des letzten, aus den als widerspruchsfrei bewerteten dynamischen Bewegungsgrößen bestimmten Neigungswinkels verwendet. Dabei kann die Rückführung des berechneten aktuellen Neigungswinkels auf den Schätzwert in aufeinanderfolgenden Zeitabschnitten stufenweise vorgenommen werden oder über einen bestimmten Zeitabschnitt kontinuierlich erfolgen.

Mit der Rückführung werden mehrere Fehlerquellen behoben. So wird zum einen die Driftgeschwindigkeit (d. h. die Stabilität des Ruhewertes) des Gyrosensors berücksichtigt, indem die Zeitabschnitte entsprechend der Größenordnung dieser Driftgeschwindigkeit, vorzugsweise in der Größenordnung von Minuten, gewählt werden und zum anderen können durch dynamische Vorgänge bewirkte Trägheitskräfte die Werte von Sensoren verfälschen, die den Stand einer Flüssigkeit anzeigen und dadurch entsprechend langsam bzw. bei kurzen und heftigen Beschleunigung in ihrer Empfindlichkeitsrichtung zu einem "Überschwappen" führen oder als Beschleunigungssensoren unter schnellen Bewegungen erzeugten Meßwerte (beispielsweise in z- und y-Richtung) eine hinreichend genaue Berechnung eines Neigungswinkels aufgrund der auftretenden Trägheitskräfte nicht zulassen. Schließlich soll auch vermieden werden, daß die bei einem Befahren einer Buckelpiste auftretenden leichten Neigungsschwankungen des Fahrzeuges zu einem kritischen Wert aufintegriert werden. Die Plausibilitätsprüfung dient daher dazu, einen gemessenen Wert als zum Neigungswinkel proportionalen wert als solchen nur zu akzeptieren, wenn alle Meßwerte der Sensoren in bestimmten widerspruchsfreien Relationen zueinander stehen.

Vorzugsweise können als weitere dynamische Bewegungsgrößen die vertikalbeschleunigung $a_z$ und gegebenenfalls die Lateralbeschleunigung $a_y$ - falls hieraus die Neigung berechnet werden soll - gemessen sowie die von dem Initiallagesensor gelieferten Werte für den Neigungswinkel $\alpha$ (genauer: den hierzu proportionalen Wert). Die von den Beschleunigungssensoren gelieferten $a_z$- und $a_y$- Werten und die von diesem Neigungssensor erzeugten $\alpha$-werte oder die auf der Basis der $a_z$- und $a_y$- Werte berechnete Werte für den aktuellen Neigungswinkel werden auf Plausibilität, also auf Widerspruchsfreiheit überprüft. Der vorteil dieser Maßnahmen besteht darin, daß genauere Informationen über den aktuellen Neigungswinkel erzeugbar ist, der dann die Integrationskonstante für das Drehratensignal bildet, wodurch die Zuverlässigkeit wesentlich erhöht wird.

Ein Ausführungsbeispiel gemäß des erfindungsgemäßen Verfahrens ist nachstehend ausführlich erläutert und anhand der Figuren dargestellt.

Es zeigen:

Fig. 1:    Ein Blockschaltbild eines Sicherheitssystems zur Durchführung des erfindungsgemäßen Verfahrens mit einem Drehratensensor,

Fig. 2:    $\omega$-$\alpha$-Graph der Gleichung (2) als theoretische Überschlag-Kennlinie,

Fig. 3:    Ein Ablaufdiagramm zur softwaremäßigen Realisierung des Sicherheitssystems gemäß Figur 1,

Fig. 4:    Ein Ausschnitt des Ablaufdiagrammes nach Figur 3 mit der Angabe von konkreten dynamischen Größen zur Durchführung einer Plausibilitätsprüfung, und

Fig. 5:    Ein Ablaufdiagramm zur Durchführung einer Plausibilitätsprüfung mittels der Größen $\omega_x$, $a_z$ und $\alpha$.

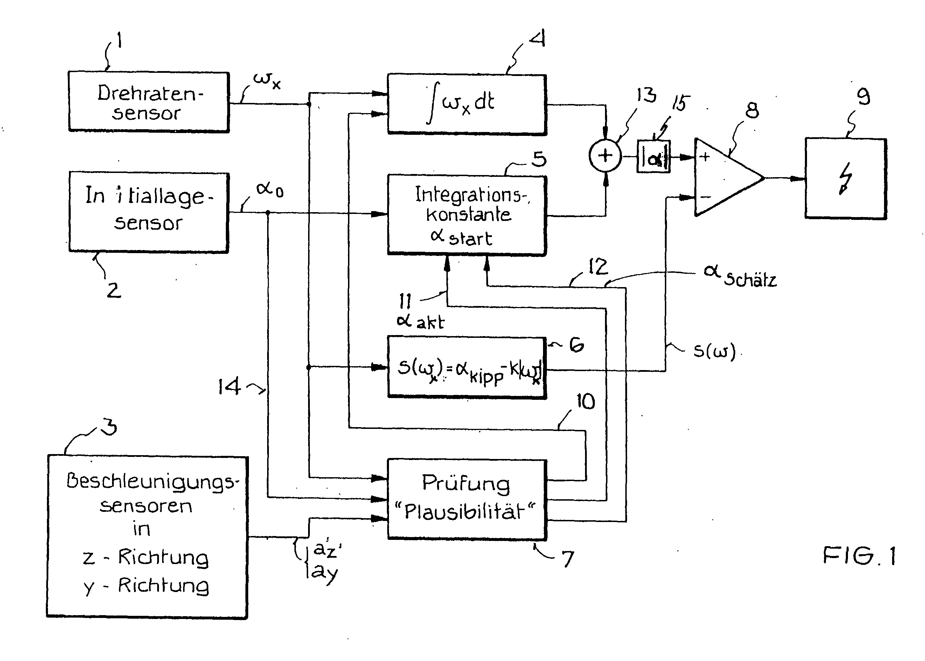

Figur 1 zeigt als Ausführungsbeispiel des erfindungsgemäßen Verfahrens ein Sicherheitssystems für Kraftfahrzeuge mit einer Zündendstufe 9 zur Auslösung einer Sicherheitseinrichtung, wie Überrollbügel, Gurtstraffer und (Side-) Airbags. Dieses Sicherheitssystem besteht aus einem Drehraten- oder Gyrosensor 1, der ein zur Winkelgeschwindigkeit $\omega_x$ (Drehrate) um die Längsachse (x-Achse) des Fahrzeuges proportionales Signal erzeugt, das einem Funktionsblock 4 zur Berechnung des Drehwinkelintegrals $\int \omega_x dt$, einem Funktionsblock 6 zur Erzeugung eines Aus-

löseschwellwertes $S(\omega)$ gemäß der Formel $\alpha_{kipp}$ - k|ω| und einem Funktionsblock 7 zur Plausibilitätsprüfung zugeführt wird. Dabei wird die fahrzeugspezifische Konstante k auf das jeweilige Fahrzeug abgestimmt, indem bspw. diese anhand von konkreten Crash-Signaturen eines bestimmten Fahrzeugtyps und/oder durch versuche mit diesem Fahrzeugtyp festgelegt werden. Es ist auch möglich, diese Konstante k variabel in Abhängigkeit vom Fahrzeugzustand bzw. vom Crashverlauf, also in Abhängigkeit von den gemessenen α- und/oder ω- Werten einzustellen. So könnte bspw. k erniedrigt werden, wenn plötzlich große α- oder ω- Werte vorliegen und damit der Auslöseschwellwert $S(\omega)$ herabgesetzt wird, um damit bei einem schnellen Überschlag eine frühzeitige Auslösung der Sicherheitseinrichtung zu gewährleisten. Ferner bietet es sich auch an, vergangene α- und/oder ω- Werten, also die Vorgeschichte des Fahrzeugzustandes bzw. eines Crashverlaufes mit einzubeziehen. So könnte bei zeitlich lange anliegenden niedrigen α- oder ω- Werten die Konstante k erniedrigt werden, mit der Folge der Erniedrigung des Auslöseschwellwertes $S(\omega)$ um damit eine sichere Auslösung auch bei langsamen Überschlägen des Fahrzeuges sicherzustellen. Falls der Verlauf der vergangenen ω- Werte und/oder Signalkomponenten (bspw. $a_z$ oder $a_y$) weiterer Sensoren einen Rückschluß auf das Ausfedern der Räder zulassen, kann dies als beginnender Überschlag interpretiert werden und zur Anpassung der Konstante k führen, indem diese erniedrigt wird.

Ferner ist ein Initiallagesensor 2 vorgesehen, der ein zur Neigung der Querachse (y-Achse) des Fahrzeuges bezüglich der Horizontalebene proportionales Signal $\alpha_0$ erzeugt, das einem Funktionsblock 5 zur Erzeugung einer Integrationskonstante $\alpha_{start}$ weitergeleitet wird. Schließlich sind weitere Sensoren 3 zur Erfassung weiterer dynamischer Fahrzeugzustände, wie Beschleunigungssensoren in Richtung der Hochachse (z-Achse) und gegebenenfalls der Querachse (y-Achse) vorgesehen, deren Meßwerte $a_z$ und $a_y$ sowie das Signal $\alpha_0$ des Initiallagesensor 2 dem Funktionsblock 7 zugeführt und dessen Funktion weiter unten beschrieben wird.

Die Ausgangssignale der Funktionsblöcke 4 und 5 werden mit einem Addierer 13 zu einem dem aktuellen Neigungswinkel in Querrichtung des Fahrzeuges proportionalen wert $\alpha_{akt,ber}$ gemäß der Formel

$$\int \dot{\omega}_x \, dt + \alpha_{start}, \text{ mit } \alpha_{start} = \alpha_0 \tag{1}$$

aufsummiert und über einen Betragsbildner 15 dem nicht-invertierenden Eingang eines Komparators 8 zugeführt. An dem invertierenden Eingang des Komparators 8 liegt der von dem Funktionsblock 6 erzeugte Auslöseschwellwert $S(\omega)$ an.

Sobald an dem Komparator 8 der Absolutbetrag des berechneten Wertes $\alpha_{akt,ber}$ den Auslöseschwellwert $S(\omega)$ überschreitet, wird das von dem Komparator 8 erzeugte H Signal der Zündendstufe 9 zur Auslösung einer nicht dargestellten Sicherheitseinrichtung zugeführt.

Die oben schon aufgeführte Formel zur Berechnung des Auslöseschwellwertes

$$S(\omega) = \alpha_{kipp} - k|\omega|, \tag{2}$$

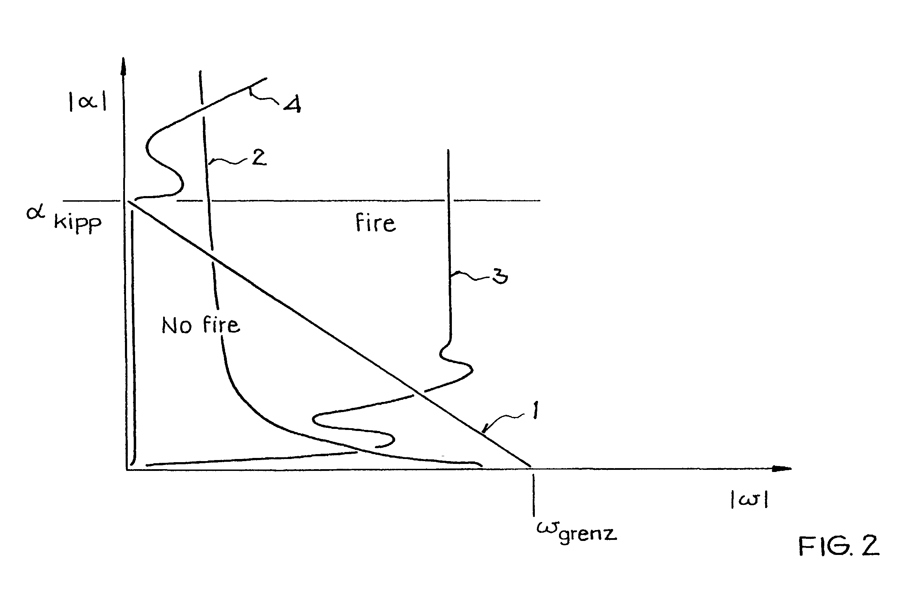

mit einer fahrzeugspezifische Konstante k, stellt eine theoretische Überschlag-Kennlinie eines Fahrzeuges dar, dessen ω - α - Graph Figur 2 mit der Bezugsziffer 1 zeigt. Dabei stellt |ω| den Betrag der Drehgeschwindigkeit der bei einem drohenden Überschlag des Fahrzeuges auftretenden Wankbewegung bzgl. dessen x- Achse und |α| den Betrag des Neigungswinkels in y-Richtung des Fahrzeuges dar. Der ω-α- Graph teilt den ersten Quadranten In zwei Gebiete ein, die einerseits Fahrzeugzustände mit ω-α- Kombinationen betreffen, die zur Auslösung einer Sicherheitseinrichtung führen sollen, also Fire-Szenarien und andererseits No-Fire-Szenarien darstellen, deren ω-α-Kombinationen nicht zur Auslösung der Sicherheitseinrichtung führen sollen. Die $\omega_{grenz}$,0 - Kombination bzw. 0,$\alpha_{kipp}$ - Kombination stellt einen Grenzzustand eines Fahrzeuges mit einer Drehgeschwindigkeit $\omega_{grenz}$ bzgl. Der x-Achse und einem Neigungswinkel von $0^0$ bzw. mit einer Drehgeschwindigkeit 0 und einem Neigungswinkel (statischer Kippwinkel) $\alpha_{kipp}$ dar, der zu einem Überschlag führt. Diese Parameter sind fahrzeugspezifisch und müssen daher für jeden Fahrzeugtyp gesondert bestimmt werden.

Ferner zeigt Figur 2 neben der Überschlag-Kennlinie 1 drei Überschlagszenarien mit den Kurven 2, 3 und 4. Die Kurve 2 zeigt den Verlauf eines Überschlages, der mit einer hohen Anfangsgeschwindigkeit beginnt, während bei Kurve 3 das Fahrzeug auf eine Schraubrampe auffährt und sich anschließend überschlägt. Mit der Kurve 4 wird ein quasistatischer Überschlag dargestellt, bei dem das Fahrzeug mit einer Winkelgeschwindigkeit von nahezu Null den statischen Kippwinkel erreicht und sich dann überschlägt.

Der oben schon genannte Funktionsblock 7 zur Plausibilitätsprüfung überprüft anhand der von dem Drehratensensor 1 gelieferten $\omega_x$-Werte und der von den Beschleunigungssensoren 3 gelieferten $a_z$- und gegebenenfalls $a_y$-werte die von dem als Neigungssensor verwendeten Initiallagesensor 2 (daher im folgenden Neigungssensor genannt) erzeugten Meßwerte oder gegebenenfalls den auf der Basis der $a_z$- und $a_y$- Werte berechneten Winkel auf Plausibilität, also auf Widerspruchsfreiheit. Der Vorteil dieser Maßnahme besteht darin, daß eine genauere Information über den aktuellen Neigungswinkel erzeugbar ist. Liegt nämlich ein plausibler, also widerspruchsfreier Wert $\alpha_{akt}$ vor, wird dieser wert $\alpha_{akt}$ über eine die Funktionsgruppe 7 mit der Funktionsgruppe 5 verbindende Leitung 11 freigegeben und gleichzeitig über eine Leitung 10 zur Funktionsgruppe 4 die Rücksetzung des Drehwinkelintegrals $\int \omega \, dt$ bewirkt, mit der Folge, daß von der Funktionsgruppe 5 dieser Wert als Startwinkel $\alpha_{start}$ gesetzt und damit als Integrationskonstante für das von dem Funktionsblock 4 erzeugte Drehwinkelintegral $\int \omega \, dt$ dient und am Addierer 13 ein möglichst genauer Wert $\alpha_{akt,ber}$ berechnet werden kann, um mit großer Sicherheit eine Auslösung bei No-Fire-Szenarien zu unterbinden.

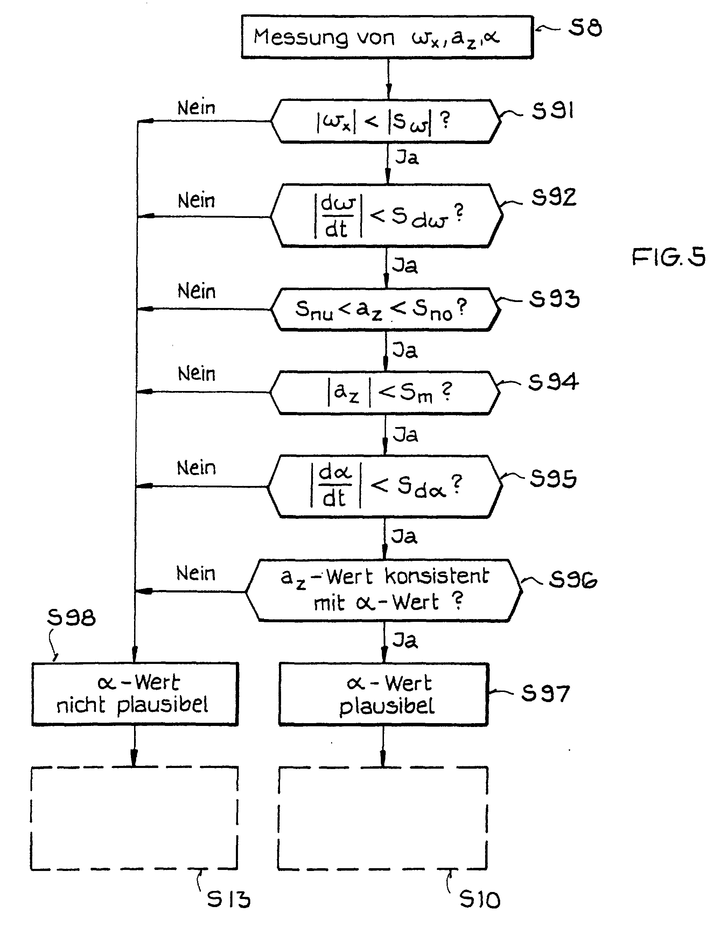

Die Plausibilitätsprüfung dient daher dazu, einen zum aktuellen Neigungswinkel des Fahrzeuges proportionalen, von dem Neigungssensor 2 erzeugten Meßwert $\alpha_{akt}$ als solchen nur zu akzeptieren, wenn alle Meßwerte der anderen Sensoren hierzu in bestimmten widerspruchsfreien Relationen stehen bzw. bestimmte Kriterien erfüllen, wie im Zusammenhang mit der Erläuterung der Figur 5 weiter unten dargestellt werden soll.

Durch die Plausibilitätsprüfung kann ein "falscher" Meßwert des Neigungssensors erkannt werden, so daß der Startwinkel $\alpha_{start}$ auf einen Schätzwert $\alpha_{schätz}$ zurückgeführt wird. Dieser Schätzwert $\alpha_{schätz}$ wird über eine Leitung 12 der Funktionsgruppe 5 zugeführt, wobei gleichzeitig über die schon erwähnte Leitung 10 auch die Rücksetzung des Drehwinkelintegrals $\int \omega \, dt$ veranlaßt wird. Als Schätzwert kann der Wert Null oder der zuletzt als plausibel erkannte Wert verwendet werden.

Die Gefahr der Anzeige eines "falschen" Wertes beruht bspw. auf dem physikalischen Prinzip von üblichen Neigungssensoren. So gibt es Sensoren, die den Stand einer Flüssigkeit anzeigen und dadurch entsprechend langsam bzw. bei kurzen und heftigen Beschleunigung in ihrer Empfindlichkeitsrichtung zu einem "Überschwappen" führen und dadurch möglicherweise einen zu großen Wert anzeigen. Auch die auf Beschleunigungssensoren wirkenden Trägheitskräfte können zu ungenauen Meßwerten führen, die eine Plausibilitätsprüfung erforderlich machen.

Desweiteren soll durch die Plausibilitätsprüfung auch ein bei der Integration auftretender prinzipieller Fehler korrigiert werden. Es wird nämlich einerseits mit zunehmender Zeitdauer der durch Integration berechnete Drehwinkel $\alpha_{akt}$ aufgrund von Fehlertoleranzen vom tatsächlichen Drehwinkel immer mehr abweichen und andererseits besteht die Gefahr, daß beim Befahren unebenen Geländes, bspw. einer Buckelpiste, die dadurch entstehenden geringen Integrationswerte mit zunehmender Zeitdauer aufintegriert werden und damit eine Neigung vortäuschen.

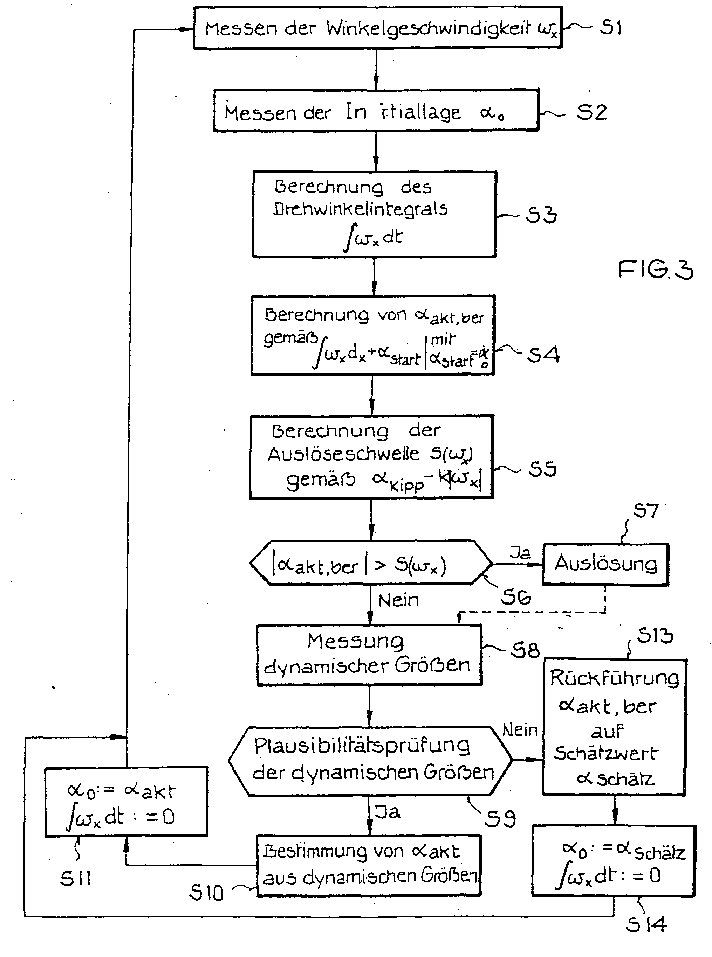

Die bei einer softwaremäßigen Realisierung des Sicherheitssystems gemäß Figur 1 von einem Mikroprozessor vorzunehmenden Verarbeitungsschritte sind in dem Ablaufdiagramm der Figur 3 dargestellt. Hiernach werden nach dem Start (Schritt S1) zunächst die Signale des Drehratensensors als $\omega_x$-werte erfaßt und digitalisiert. Entsprechendes wird in Schritt S2 hinsichtlich des Initiallagesignales $\alpha_0$ durchgeführt. Anschließend wird im Schritt S3 das Drehwinkelintegral $\int \omega \, dt$, im Schritt S4 die Summenbildung zur Erzeugung des Wertes $\alpha_{akt,ber}$ mittels der Formel (1) und $\alpha_{start} = \alpha_0$ und im Schritt S5 der Auslöseschwellwert $S(\omega_x)$ mittels der Formel (2) berechnet und nachfolgend wird ein Vergleich des Wertes $\alpha_{akt,ber}$ mit dem Auslöseschwellwert $S(\omega_x)$ durchgeführt (Schritt S6).

Falls dieser Auslöseschwellwert $S(\omega_x)$ überschritten wird, erfolgt mit Schritt S7 die Auslösung einer Sicherheitseinrichtung, beispielsweise eines Gurtstraffers, eines Side-Airbags oder eines Überschlagbügels. Bleibt der Wert $\alpha_{akt,ber}$ unter diesem Auslöseschwellwert $S(\omega_x)$, wird das Verfahren mit Schritten S8 und S9 fortgeführt. Diese verarbeitungsschritte S8 und S9 können sich auch an den Auslösungsschritt S7 anschließen, um beispielsweise sicherzustellen, daß beim Auftreten einer weiteren Crash-Situation, also eines sogenannten Nachfolge-Crashs eine weitere Sicherheitseinrichtung ausgelöst werden kann.

Die in Schritt S8 gemessenen weiteren dynamischen Zustandsgrößen des Fahrzeuges werden in Schritt S9 der schon oben beschriebenen Plausibilitätsprüfung unterzogen. Falls diese Größen als in sich widerspruchsfrei bewertet werden, wird hieraus in Schritt S10 der Wert für den aktuellen Neigungswinkel $\alpha_{akt}$ des Fahrzeuges bestimmt und dient nun als Ausgangswert für die Integration des $\omega_x$ - Wertes in Schritt S3, indem zuvor dieses Integral auf den Wert Null zurückgesetzt und $\alpha_{akt}$ als $\alpha_0$ bestimmt wird (Schritt S11).

Das verfahren setzt sich fort mit der Messung des $\omega_x$ - Wertes (Schritt S1) und der sich direkt daran anschließenden Berechnung des Drehwinkelintegrals gemäß des Schrittes S3, wobei die Messung der Initiallage (Schritt S2) natürlich entfällt.

Falls die Plausibilitätsprüfung gemäß Schritt S9 negativ ausfällt, erfolgt eine Rückführung des berechneten aktuellen Wertes $\alpha_{akt,ber}$ auf einen Schätzwert $\alpha_{schätz}$ (Schritt S13). Dieser Schätzwert $\alpha_{schätz}$ definiert dann den Wert $\alpha_0$, so daß zusammen mit der Rücksetzung des Drehwinkelintegrals $\int \omega \, dt$ auf den Wert Null mit Schritt S12 das Verfahren fortgesetzt wird.

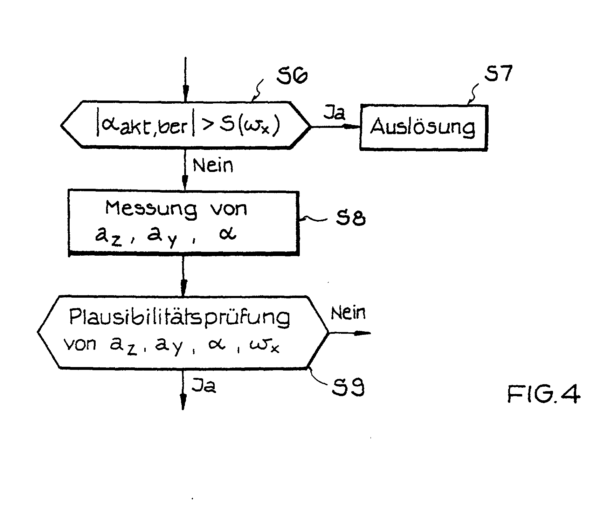

Als weitere dynamische Zustandsgrößen werden gemäß Figur 4 die Beschleunigung in Richtung der Hochachse (z-Achse) des Fahrzeuges sowie der Wert $\alpha$ des Neigungssensors 2 verwendet (Schritt S8). Diese Größen werden zusammen mit dem von dem Gyrosensor 1 gemessenen Wert $\omega_x$ in der in Figur 5 dargestellten Weise auf Widerspruchsfreiheit geprüft, ob also der von dem Neigungssensor gemessene Wert $\alpha$ als plausibel übernommen werden kann.

Gemäß diesem Ablaufdiagramm wird zunächst geprüft, ob der $\omega_x$-Wert unter einer bestimmten Schwelle $S_\omega$ bleibt, um bspw. die aufgrund der Trägheit der in einem Neigungssensor vorhandenen Flüssigkeit auftretenden "falschen" Werte auszuschließen (Schritt S91).

Gemäß Schritt S92 darf auch die Änderungsgeschwindigkeit des $\omega_x$- Wertes eine bestimmte Schwelle $S_{d\omega}$ nicht überschreiten. Wird diese Schwelle überschritten, bedeutet dies, daß Trägheitskräfte wirken können, die möglicherweise zu einem "falschen" Meßwert führen.

Gemäß Schritt S93 dürfen die $a_z$- Werte den Bedingungen eines stabilen und normalen Fahrzeugzustandes nicht widersprechen, also darf der $a_z$- Wert weder zu klein - da ansonsten Bodenwellen erfaßt oder ein großer Neigungswinkel vorliegt- noch zu groß sein, da dann Schlaglöcher erfaßt oder eine Steilwand durchfahren wird. Die Schwellen $S_{no}$ und $S_{nu}$ werden daher aufgrund von Fahrzeugdaten und Versuchen unter Berücksichtigung der Meßtoleranzen des $a_z$- Sensors festgelegt.

Mit der Bedingung nach Schritt S94 wird überprüft, ob das Fahrzeug über eine Holperstrecke fährt. Hierzu werden die $a_z$- werte mit einem Hochpaßoder Bandpaßfilter (im kHz-Bereich) gefiltert und der Betrag dieser gefilterten Werte mit einer Schwelle $S_m$ verglichen. Wird diese Schwelle überschritten, liegt eine Holperstrecke vor, so daß der Neigungssensor "falsche" Werte liefern könnte.

Ferner wird in Schritt S95 überprüft, ob nicht die Änderungsgeschwindigkeit des von dem Neigungssensor gelieferten Wertes $\alpha$, die an einer Schwelle $S_{d\alpha}$ gemessen wird, zu hoch ist, da dann Kräfte auf das Fahrzeug wirken, die die Flüssigkeit des Neigungssensors zum Schwabbeln bringen, mit der Folge der Erzeugung von "falschen" Werten.

Schließlich wird noch überprüft, ob der Wert $\alpha$ mit dem von dem Beschleunigungssensor in z-Richtung gemessenen $a_z$- Wert konsistent ist (Schritt S96), da der zuletzt genannte Wert dem cos $\alpha$ ungefähr entsprechen muß.

Liegen alle in den Schritten S91 bis S96 genannten Bedingungen vor, wird der von dem Neigungssensor gelieferte Wert $\alpha$ als plausibel bewertet (Schritt S97). Wird dagegen eine dieser Bedingungen nicht erfüllt, wird dieser Wert als nicht plausibel bewertet (Schritt S98). Es versteht sich von selbst, daß im Rahmen der Plausibilitätsprüfung weder alle die in Figur 5 aufgeführten Prüfungen durchgeführt werden müssen noch nicht noch weitere Prüfbedingungen aufgestellt werden können.

Die bei einer negativ ausfallenden Plausibilitätsprüfung vorgesehene Rückführung auf einen Schätzwert $\alpha_{schätz}$ kann auf unterschiedliche Weise durchgeführt werden. Zunächst kann als Schätzwert $\alpha_{schätz}$ der Wert Null verwendet werden, vor allem dann, wenn der letzte als plausibel bewertete Wert $\alpha$ schon sehr lange zurückliegt. Desweiteren kann der zuletzt als plausibel bewertete wert $\alpha$ als Schätzwert $\alpha_{schätz}$ eingesetzt werden.

Auch kann die Rückführung des aktuellen berechneten Wertes $\alpha_{akt,ber}$ auf den Schätzwert $\alpha_{schätz}$ in unterschiedlicher Weise durchgeführt werden. So kann bspw. die Rückführung sofort oder zeitverzögert in einem Schritt oder in aufeinanderfolgenden Zeitintervallen stufenweise erfolgen, d. h. sowohl der Startwinkel $\alpha_{start}$ in Richtung des Schätzwertes als auch das Drehwinkelintegral $\int \omega_x\, dt$ in Richtung des Wertes Null, als auch kontinuierlich über eine bestimmte Zeitdauer. Die dabei gewählten Zeitintervalle bestimmen sich nach der Driftgeschwindigkeit des verwendeten Gyrosensors (entspricht der Stabilität des Ruhewertes) und bewegt sich in der Größenordnung von Minuten und/oder nach dem Wert der Auflösung der Messung.

## Patentansprüche

1. verfahren zur Detektion von Überrollvorgängen bei Kraftfahrzeugen mit Sicherheitseinrichungen, bei dem mittels eines von einem Gyrosensor (1) erzeugten Drehratensignales ($\omega_x$) hinsichtlich einer Drehung um die Längsachse (x-Achse) des Fahrzeuges und mittels eines, von einem Sensor (2) erzeugten, die Initiallage der Querachse des Fahrzeuges angebenden Initiallagesignales ($\alpha_0$) folgende Verfahrensschritte durchgeführt werden:

   a) Berechnung des aktuellen Neigungswinkels ($\alpha_{akt,ber}$) gemäß

$$\int \omega_x dt + \alpha_{start} = \alpha_{akt,ber}\,, \text{ mit } \alpha_{start} = \alpha_0 \qquad (1)$$

   b) Erzeugung einer Auslöseschwelle ($S(\omega_x)$) gemäß

$$S(\omega_x) = \alpha_{kipp} - k|\omega_x|, \qquad (2)$$

   wobei $\alpha_{kipp}$ dem statischen Kippwinkel des Fahrzeuges entspricht und k eine fahrzeugspezifische und in Abhängigkeit des Fahrzeugzustandes und/oder des Crash-Verlaufs einstellbare Konstante darstellt,
   c) Vergleich des Wertes des Absolutbetrags des berechneten Neigungswinkels ($\alpha_{akt,ber}$) mit dem Wert der Auslöseschwelle ($S(\omega_x)$), und

d) Erzeugung eines Auslösesignales für wenigstens eine Sicherheitseinrichtung bei Überschreitung der Auslöseschwelle (S($\omega_x$)) gemäß

$$|\alpha_{akt,ber}| > S(\omega_x).$$

2. Verfahren nach Anspruch 1, bei dem neben der Detektion des Drehwinkels ($\omega_x$) und der Initiallage ($\alpha_0$) des Fahrzeuges weitere dynamische Bewegungsgrößen ($a_y$, $a_z$, $\alpha_{neig}$) des Fahrzeuges detektiert und folgende weitere Verfahrensschritte durchgeführt werden:

e) Bewertung der werte der weiteren dynamischen Bewegungsgrößen ($a_y$, $a_z$, $\alpha_{neig}$) auf Widerspruchsfreiheit,
f) Bestimmung des aktuellen Neigungswinkels ($\alpha_{akt}$) aus den dynamischen Bewegungsgrößen ($a_y$, $a_z$, $\alpha_{neig}$) wenn die dynamischen Bewegungsgrößen ($a_y$, $a_z$, $\alpha_{neig}$) als widerspruchsfrei bewertet werden,

 f1) Zurücksetzen des berechneten aktuellen Neigungswinkels ($\alpha_{akt,ber}$) auf den Wert dieses aktuellen Neigungswinkels ($\alpha_{akt}$),
 f2) Zurücksetzen des Integrals $\int \omega$ dt auf den Wert Null, und
 f3) anschließende Berechnung des aktuellen Neigungswinkels ($\alpha_{akt,ber}$) gemäß:

$$\int \omega dt + \alpha_{start} = \alpha_{akt,ber}, \text{ mit } \alpha_{start} = \alpha_{akt} \qquad (1')$$

g) Rückführung des berechneten aktuellen Neigungswinkels ($\alpha_{akt,ber}$) auf einen Schätzwert ($\alpha_{schätz}$) des aktuellen Neigungswinkels ($\alpha_{akt}$), wenn die Werte der dynamischen Bewegungsgrößen ($a_y$, $a_z$, $\alpha_{neig}$) als nicht widerspruchsfrei bewertet werden, und anschließende Berechnung des aktuellen Neigungswinkels ($\alpha_{akt,ber}$) gemäß:

$$\int \omega dt + \alpha_{start} = \alpha_{akt,ber} \text{ mit. } \alpha_{start} = \alpha_{schätz} \qquad (1'')$$

3. Verfahren nach Anspruch 2, bei dem als Schätzwert ($\alpha_{schätz}$) der Wert Null oder der wert des letzten aus den als widerspruchsfrei bewerteten dynamischen Bewegungsgrößen ($a_y$, $a_z$, $\alpha_{neig}$) bestimmte Neigungswinkel verwendet wird.

4. Verfahren nach Anspruch 2 oder 3, bei dem die Rückführung des berechneten aktuellen Neigungswinkels ($\alpha_{akt,ber}$) auf den Schätzwert ($\alpha_{schätz}$) in aufeinanderfolgenden Zeitabschnitten stufenweise erfolgt.

5. Verfahren nach Anspruch 2 oder 3, bei dem die Rückführung des berechneten aktuellen Neigungswinkels ($\alpha_{akt,ber}$) auf den Schätzwert ($\alpha_{schätz}$) kontinuierlich während eines bestimmten Zeitabschnittes erfolgt.

6. Verfahren nach einem der Ansprüche 2 bis 5, bei dem als dynamische Bewegungsgrößen ($a_y$, $a_z$, $\alpha_{neig}$) wenigstens die mittels Beschleunigungssensoren (3) detektierte vertikalbeschleunigung ($a_z$) und Lateralbeschleunigung ($a_y$) und der mittels eines Neigungssensors (2) detektierte Neigungswinkel des Fahrzeuges verwendet werden.

7. Verfahren nach Anspruch 6, bei dem das Signal des Neigungssensors (2) als Wert des aktuellen Neigungswinkels ($\alpha_{akt}$) gemäß Verfahrensschritt f) bestimmt wird.

**Claims**

1. Method of detecting roll-over in motor vehicles with safety devices, whereby by means of a rotational speed signal ($\omega_x$) relating to a rotation about the longitudinal axis (x-axis) of the vehicle and generated by a gyro sensor (1) and by means of an initial position signal ($\alpha_0$) indicating the initial position of the transverse axis of the vehicle and generated by a sensor (2) the following method steps are carried out:

a) calculation of the actual angle of inclination ($\alpha_{akt,ber}$) in accordance with
 $\int \omega$ dt + $\alpha_{start}$ = $\alpha_{akt.ber}$, in which

$$\alpha_{start} = \alpha_0 \tag{1}$$

b) generation of a trigger threshold ($S(\omega_x)$) in accordance with

$$S(\omega_x) = \alpha_{kipp} - k|\omega_x| , \tag{2}$$

wherein $\alpha_{kipp}$ corresponds to the static tilting angle of the vehicle and k is a vehicle-specific constant adjustable in dependence upon the vehicle status and/or the crash behaviour,

c) comparison of the value of the absolute amount of the calculated angle of inclination ($\alpha_{akt,ber}$) with the value of the trigger threshold ($S(\omega_x)$), and

d) generation of a trigger signal for at least one safety device upon overshooting of the trigger threshold ($S(\omega_x)$) in accordance with

$$|\alpha_{akt,ber}| > S(\omega_x).$$

**2.** Method according to claim 1, whereby besides detection of the angle of rotation ($\omega_x$) and the initial position ($\alpha_0$) of the vehicle further dynamic motional variables ($a_y$, $a_z$, $\alpha_{neig}$) of the vehicle are detected and the following further method steps are carried out:

e) evaluation of the values of the further dynamic motional variables ($a_y$, $a_z$, $\alpha_{neig}$) for consistency,

f) determination of the actual angle of inclination ($\alpha_{akt}$) from the dynamic motional variables ($a_y$, $a_z$, $\alpha_{neig}$) if the dynamic motional variables ($a_y$, $a_z$, $\alpha_{neig}$) are found to be consistent,

f1) resetting of the calculated actual angle of inclination ($\alpha_{akt,ber}$) to the value of the actual angle of inclination ($\alpha_{akt}$),

f2) resetting of the integral $\int \omega_x \, dt$ to the value zero, and

f3) subsequent calculation of the actual angle of inclination ($\alpha_{akt,ber}$) in accordance with:

$$\int \omega dt + \alpha_{start} = \alpha_{akt,ber}, \text{ in which } \alpha_{start} =$$

$$\alpha_{akt} \tag{1'}$$

g) restoring the calculated actual angle of inclination ($\alpha_{akt,ber}$) to an estimated value ($\alpha_{schätz}$) of the actual angle of inclination ($\alpha_{akt}$) if the values of the dynamic motional variables ($a_y$, $a_z$, $\alpha_{neig}$) are found to be inconsistent, and subsequent calculation of the actual angle of inclination ($\alpha_{akt,ber}$) in accordance with:

$$\int \omega dt + \alpha_{start} = \alpha_{akt,ber}, \text{ in which } \alpha_{start} = \alpha_{schätz} \tag{1''}$$

**3.** Method according to claim 2, whereby there is used as an estimated value ($\alpha_{schätz}$) the value zero or the value of the last angle of inclination determined from the dynamic motional variables ($a_y$, $a_z$, $\alpha_{neig}$) found to be consistent.

**4.** Method according to claim 2 or 3, whereby the restoring of the calculated actual angle of inclination ($\alpha_{akt,ber}$) to the estimated value ($\alpha_{schätz}$) is effected stepwise in successive time slots.

**5.** Method according to claim 2 or 3, whereby the restoring of the calculated actual angle of inclination ($\alpha_{akt,ber}$) to the estimated value ($\alpha_{schätz}$) is effected continuously during a specific time slot.

**6.** Method according to one of claims 2 to 5, whereby there are used as dynamic motional variables ($a_y$, $a_z$, $\alpha_{neig}$) at least the vertical acceleration ($a_z$) and lateral acceleration ($a_y$), which are detected by acceleration sensors (3), and the angle of inclination of the vehicle, which is detected by means of an inclination sensor (2).

**7.** Method according to claim 6, whereby the signal of the inclination sensor (2) is determined as a value of the actual

angle of inclination ($\alpha_{akt}$) in accordance with method step f).

**Revendications**

1. Procédé de détection de processus de retournement dans le cas de véhicules munis de dispositifs de sécurité, dans lequel au moyen d'un signal de vitesse de rotation ($\omega_x$) généré par un gyrocapteur (1) par rapport à une rotation autour de l'axe longitudinal (axe x) du véhicule et au moyen d'un signal de position initiale ($\alpha_0$) indiquant la position initiale de l'axe transversal du véhicule, les étapes de procédé suivantes sont exécutées :

   a) calcul de l'angle d'inclinaison actuel ($a_{akt,\ ber}$) selon

   $$\int \omega_x dt + \alpha_{start} = \alpha_{akt,ber}, \text{ avec } \alpha_{start} = \alpha_0 \tag{1}$$

   b) génération d'un seuil de déclenchement ($S(\omega_x)$) selon

   $$S(\omega_x) = \alpha_{kipp} - k|\omega_x|, \tag{2}$$

   où $\alpha_{kipp}$ correspond à l'angle de basculement statique du véhicule et k représente une constante particulière au véhicule et réglable en fonction de l'état du véhicule et/ou de l'allure de l'accident,
   c) comparaison de la valeur de la grandeur absolue de l'angle d'inclinaison calculé ($\alpha_{akt,\ ber}$) à la valeur du seuil de déclenchement ($S(\omega_x)$), et
   d) génération d'un signal de déclenchement pour au moins un dispositif de sécurité lors du dépassement du seuil de sécurité ($S(\omega_x)$) selon

   $$|\alpha_{akt,ber}| > S(\omega_x).$$

2. Procédé selon la revendication 1, dans lequel en plus de la détection de l'angle de rotation ($\omega_x$) et de la position initiale ($\alpha_0$) du véhicule, d'autres grandeurs de mouvement dynamiques ($a_y$, $a_z$, $\alpha_{neig}$) du véhicule sont détectées et les autres étapes de procédés suivantes sont exécutées :

   e) évaluation des valeurs des autres grandeurs de mouvement dynamique ($a_y$, $a_z$, $\alpha_{neig}$) de façon non contradictoire,
   f) détermination de l'angle d'inclinaison actuel ($\alpha_{akt}$) à partir des grandeurs de mouvement dynamiques ($a_y$, $a_z$, $\alpha_{neig}$) lorsque les grandeurs de mouvement dynamiques ($a_y$, $a_z$, $\alpha_{neig}$) sont évaluées de façon non contradictoire,

   f1) retour de l'angle d'inclinaison réel calculé ($\alpha_{akt,ber}$) sur la valeur de cet angle d'inclinaison actuel ($\alpha_{axt}$),
   f2) retour de l'intégrale $\int \omega_x dt$ à la valeur zéro, et
   f3) calcul ensuite de l'angle d'inclinaison actuel ($\alpha_{akt,ber}$) selon :

   $$\int \omega dt + \alpha_{start} = \alpha_{akt,ber}, \text{ avec } \alpha_{start} = \alpha_{akt} \tag{1'}$$

   g) retour de l'angle d'inclinaison actuel calculé ($\alpha_{akt,ber}$) sur une valeur d'estimation ($\alpha_{estim}$) de l'angle d'inclinaison actuel ($\alpha_{akt}$), lorsque le valeurs des grandeurs de mouvement dynamique ($a_y$, $a_z$, $\alpha_{neig}$) sont calculées de façon contradictoire et ensuite calcul de l'angle d'inclinaison actuel ($\alpha_{akt,ber}$) selon :

   $$\int \omega dt + \alpha_{start} = \alpha_{akt,ber} \text{ avec } \alpha_{start} = \alpha_{estim} \tag{1''}$$

3. Procédé selon la revendication 2, dans lequel en tant que valeur d'estimation ($\alpha_{estim}$) est utilisée la valeur zéro ou la valeur du dernier angle d'inclinaison déterminé à partir des grandeurs de mouvement dynamique évaluées de façon non contradictoire ($a_y$, $a_z$, $\alpha_{neig}$).

**4.** Procédé selon la revendication 2 ou 3, dans lequel le retour de l'angle d'inclinaison réel calculé ($\alpha_{akt,ber}$) à la valeur d'estimation ($\alpha_{estim}$) s'effectue progressivement dans des secteurs de temps successifs.

**5.** Procédé selon la revendication 2 ou 3, dans lequel le retour de l'angle d'inclinaison actuel calculé ($\alpha_{akt,ber}$) à la valeur d'estimation ($\alpha_{estim}$) s'effectue continûment durant un secteur de temps déterminé.

**6.** Procédé selon l'une des revendications 2 à 5, dans lequel en tant que grandeurs de mouvements dynamiques ($a_y$, $a_z$, $\alpha_{neig}$) sont utilisées au moins l'accélération verticale ($a_z$) et l'accélération latérale ($a_y$) détectées au moyen de capteurs d'accélération (3) et l'angle d'inclinaison du véhicule détecté au moyen d'un capteur d'inclinaison (2).

**7.** Procédé selon la revendication 6, dans lequel le signal du capteur d'inclinaison (2) est déterminé en tant que valeur de l'angle d'inclinaison actuel ($\alpha_{akt}$) selon l'étape de procédé f).

Drehraten-sensor 1

$\omega_x$

$\int \omega_x \, dt$ 4

13

$|\alpha|$ 15

8

9

In i tiallage-sensor 2

$\alpha_0$

Integrations-konstante $\alpha_{start}$ 5

12

$\alpha_{schätz}$

11

$\alpha_{akt}$

$S(\omega_x) = \alpha_{kipp} - k|\omega_x|$ 6

$S(\omega)$

14

10

Beschleunigungs-sensoren in z - Richtung y - Richtung 3

Prüfung "Plausibilität" 7

$\begin{cases} a_z' \\ a_y \end{cases}$

FIG. 1

EP 1 157 898 B1

FIG.2

$\omega_{grenz}$

$|\omega|$

Fire

No fire

$|\alpha|$

$\alpha_{kipp}$

1

2

3

4

FIG.3

Flussdiagramm:

**S1** — Messen der Winkelgeschwindigkeit $\omega_x$

**S2** — Messen der Initiallage $\alpha_0$

**S3** — Berechnung des Drehwinkelintegrals $\int \omega_x \, dt$

**S4** — Berechnung von $\alpha_{akt,ber}$ gemäß $\int \omega_x \, d_x + \alpha_{start}$ mit $\alpha_{start} = \alpha_0$

**S5** — Berechnung der Auslöseschwelle $S(\omega_x)$ gemäß $\alpha_{Kipp} - k|\omega_x|$

**S6** — $|\alpha_{akt,ber}| > S(\omega_x)$ — Ja → **S7** Auslösung — Nein ↓

**S8** — Messung dynamischer Größen

**S9** — Plausibilitätsprüfung der dynamischen Größen — Nein → **S13** Rückführung $\alpha_{akt,ber}$ auf Schätzwert $\alpha_{schätz}$ — Ja ↓

**S10** — Bestimmung von $\alpha_{akt}$ aus dynamischen Größen

**S11** — $\alpha_0 := \alpha_{akt}$ ; $\int \omega_x \, dt := 0$

**S14** — $\alpha_0 := \alpha_{schätz}$ ; $\int \omega_x \, dt := 0$

FIG.4

FIG.5